# EUROPEAN PATENT SPECIFICATION

(11) **EP 1 406 394 B1**
(45) Date of publication and mention of the grant of the patent: **13.08.2008**
(21) Application number: 02022477.0
(22) Date of filing: 04.10.2002
(51) Int. Cl.: H04B 1/38

(54) **DEVICE FOR RECEIVING A SIM CARD**
EINRICHTUNG ZUR AUFNAHME EINER SIM-KARTE
DISPOSITIF RECEPTEUR POUR UNE CARTE SIM

(43) Date of publication of application: 07.04.2004
(73) Proprietor: High Tech Computer Corp., Taoyuan (TW)
(72) Inventor: Chuang, I-Cheng, Shindian City, Taipei (TW); Ho, San-Chi, Shindian City, Taipei (TW)
(74) Representative: Weber, Joachim

(56) References cited:
- EP-A- 1 202 394
- US-A- 5 957 718

## Description

### BACKGROUND OF THE INVENTION

### 1. Field of the Invention

The invention relates to a portable data processing / communication device, and more particularly to a data processing / communication device which includes an apparatus for inserting a SIM card into the data processing / communication device.

### 2. Description of the Related Art

These years, due to the development of communication and wireless network transmission technology, mobile communication devices are more widely used by modem people. Let's take a mobile phone as an example. It is not confined in physical phone wires. It can be used in any place within the covering area of a communication network, even in a high-speed driving car. Generally, in a Group Special Mobile (GSM) system, a user can get a subscriber identity module (SIM) card when applying for a mobile phone account. The SIM card is a kind of micro processing chips, which stores the related identification information of a user, such as the mobile phone number, the communication parameters of the communication network and the personal information of the user. The function of SIM cards is for identifying legal users, and is as an important evidence for making calls and billing.

From the usage aspect, nowadays, a personal digital assistant (PDA) with the function of wireless communication is developed. That is, with inserting a SIM card, the PDA with the function of wireless communication can be used as a mobile phone. Therefore, the user does not have to carry a PDA and a mobile phone at the same time.

The conventional method for coupling a mobile phone with a SIM card is to open the housing of the battery of a mobile phone first, and then install the SIM card into the mobile phone. This kind of design has the following disadvantages: (1). The size of the battery must be reduced or the size of the mobile phone must be increased in order to have the inner space to insert a SIM card. (2). It is inconvenient for users to open the cover of the housing first in order to install or to uninstall a SIM card. (3). It would easily cause other parts of the mobile phone worn out or even damaged when installing or uninstalling a SIM card.
US-A-5 957 718 discloses a device for receiving a memory card wherein the device is equipped with a SIM card holding means equipped in the inner side of the housing, wherein the SIM card holding means comprises a SIM card passage and an ejecting unit for ejecting the SIM card when the SIM card is inserted into the SIM card holding means through the SIM card passage. The device is further equipped with an elastic lockup means equipped in the outer side of the housing corresponding to the position of the SIM card passage for locking up the SIM card when the SIM card is inserted into the SIM card holding means.

### SUMMARY OF THE INVENTION

It is therefore an object of the invention to provide an apparatus for inserting a SIM card into a portable data processing / communication device in order to achieve the following advantage that users are able to easily and directly insert a SIM card into the portable data processing / communication device or reject the SIM card out of the portable data processing / communication device.
This object is solved by the features of the main claim. The sub-claims contain further preferred developments of the invention.

The invention achieves the above-identified objects by providing an apparatus for inserting a SIM card into the portable data processing / communication device. The portable data processing / communication device includes a housing. The apparatus for inserting a SIM card into the portable data processing / communication device comprises a SIM card holding means and an elastic lockup means. The SIM card holding means is equipped in the inner side of the housing, wherein the SIM card holding means further comprises a SIM card passage and an ejecting means for ejecting the SIM card when the SIM card is inserted into the SIM card holding means through the SIM card passage. The elastic lockup means is equipped in the outer side of the housing corresponding to the position of the SIM card passage for locking up the SIM card when the SIM card is inserted into the SIM card holding means. When the SIM card is inserted into the SIM card holding means through the SIM card passage, the SIM card is fixed by the ejecting means and the elastic lockup means, and when the elastic lockup means is pressed, the SIM card can be ejected from the SIM card holding means through the SIM card passage.

### BRIEF DESCRIPTION OF THE DRAWINGS

Objects, features, and advantages of the invention will become apparent from the following detailed description of the preferred but non-limiting embodiments. The description is made with reference to the accompanying drawings, in which:

Figure 1 is an illustration that shows an apparatus for inserting a SIM card into the portable data processing / communication device according to the preferred embodiment of the invention;

Figure 2 is an illustration that shows the inner structure of the portable data processing / communication device according to FIG. 1;

Figure 3A is an illustration that shows the structure of the SIM card holding means according to the preferred embodiment of the invention;

Figure 3B is an illustration of the side view of the SIM card holding means according to Figure 3A;

Figure 4A∼4C are illustrations that show the related location between the SIM card holding means and the elastic lockup means before the SIM card is inserted into the portable data processing / communication device;

Figure 5A∼5C are illustrations that show the related location between the SIM card holding means and the elastic lockup means after the SIM card is inserted into the portable data processing / communication device; and

Figure 6A∼6C are illustrations that show the related location between the SIM card holding means and the elastic lockup means when the SIM card is ejected from the portable data processing / communication device.

### DESCRIPTION OF THE PREFERRED EMBODIMENT

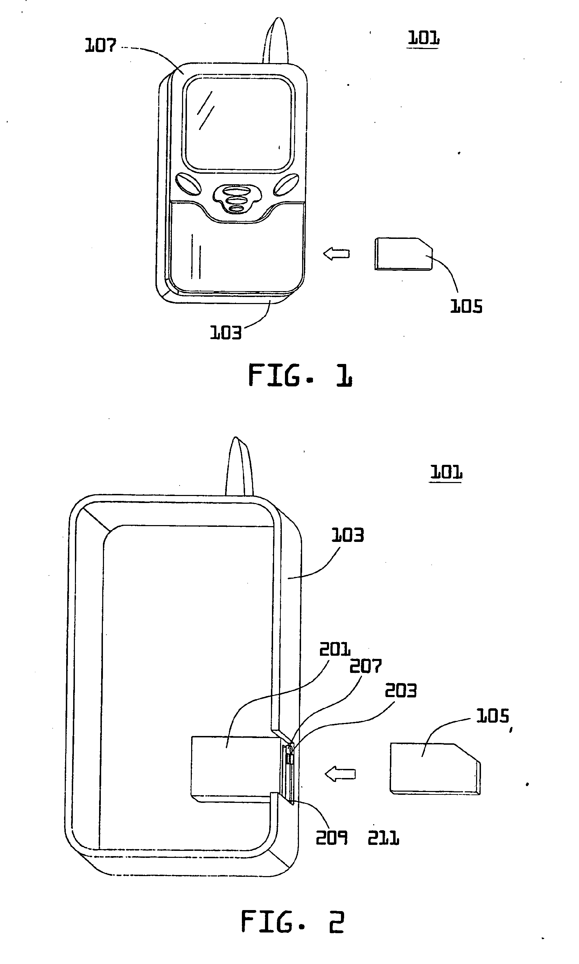

Please referring to FIG. 1, it is an illustration of a portable data processing / communication device according to the preferred embodiment of the invention. As shown in FIG. 1, a portable data processing / communication device 101 includes a housing 103, and can allow a subscriber identity module (SIM) card 105 to being inserted to the portable data processing / communication device 101 via the side of the housing 103. In order to easily account for this example, an upper covering 107 of the housing 103 is taken off.

FIG.2 illustrates the inner structure of the data processing / communication device 101 according to FIG. 1. As shown in FIG. 2, the data processing / communication device 101 includes a SIM card holding means 201 and an elastic lockup means 203. The SIM card holding means 201 is installed in the inner side of the housing 103 in order to fasten a SIM card 105. The SIM card holding means includes a SIM card passage 211, via which a SIM card can be inserted into or ejected from the SIM card holding means 201.

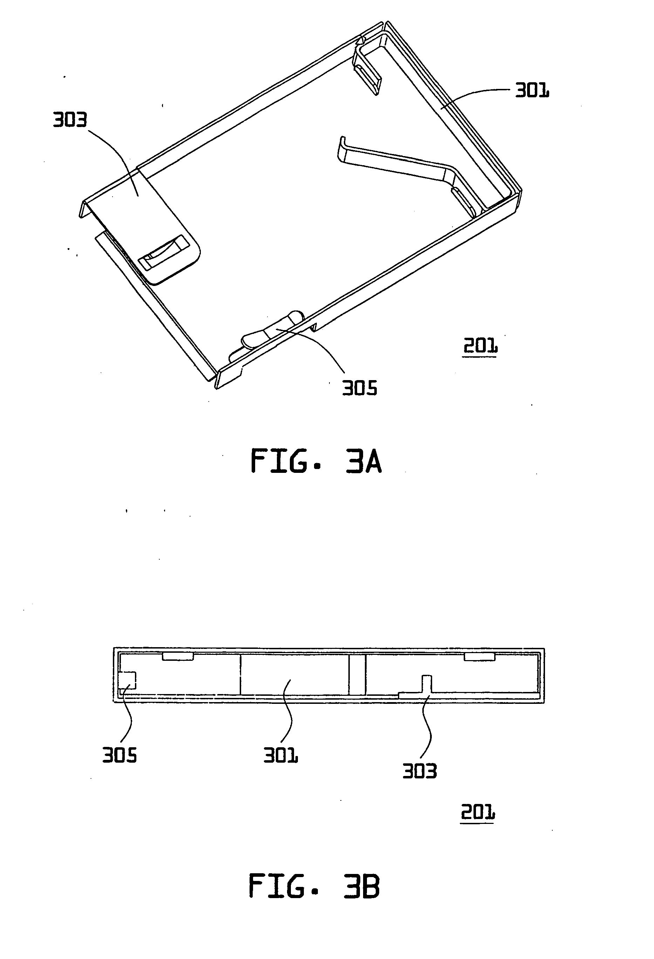

Figure 3A is an illustration that shows the structure of the SIM card holding means according to the preferred embodiment of the invention. Figure 3B is an illustration of the side view of the SIM card holding means according to Figure 3A. As the FIG. 3A and FIG. 3B show, the SIM card holding means 201 further includes an ejecting means 301. While the SIM card 105 is pushed into the SIM card holding means 201, the SIM card 105 can press the ejecting unit 301. It is therefore, when a user wants to eject the SIM card 105, the user can press the ejecting means 301, then the ejecting means 301 will eject the SIM card 105 by its rebounding force.

Moreover, The SIM card holding means 201 includes a SIM card supporting means 303 and a supporting means 305, which are for supporting and fastening the SIM card 105 respectively. That makes the SIM card 105 in the SIM card holding means 201 fixed in the SIM card holding means 201. Additionally, the SIM card supporting means 303 has elasticity so as to fix the SIM card 105 tightly. The SIM card holding means 201can be manufactured on the housing (not shown in the figures) by the surface mounting technology (SMT) so as to save the manufacturing time and cost. And the SIM card holding means 201 can be made by but not limited to Nickel Silver Strir.

Besides, as shown in FIG. 2, on the housing 103, the elastic lockup means 203 is equipped on the position corresponding to the position of the SIM card passage 211. It is for locking up the SIM card 105 when it is inserted into the portable data processing / communication device 101, and for enabling the SIM card 105 not to be ejected or disconnected from the portable data processing / communication device 101. However, the elastic lockup means 203 further includes a free end 207, and a fixed end 209. The fixed end 209 is fixed on the housing 103, and the free end 207 is used for being forced to move along the housing when the free end 207 is pressed. This movement makes the elastic lockup means 203 not to lock up the SIM card 105 that has been inserted in the portable data processing / communication device 101.

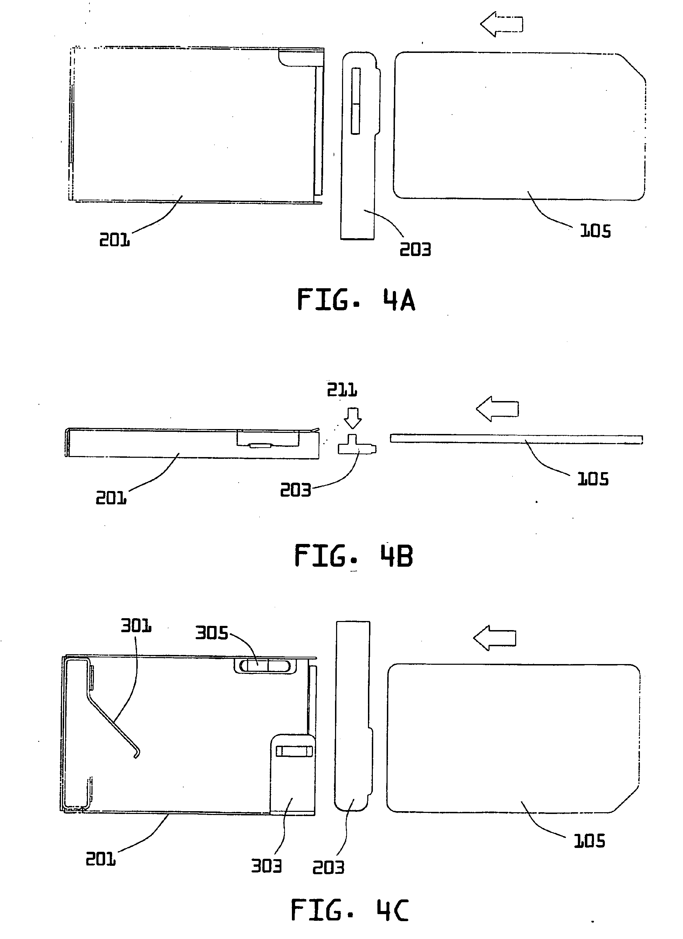

Please referring to FIG. 4A, FIG. 4B, and FIG. 4C, which illustrate the related locations among the SIM card 105, the SIM card holding means 201 and the elastic lockup means 203 before the SIM card 105 is inserted into the portable data processing / communication device 101. FIG. 4A and FIG. 4C are the upward view and the downward view of the related locations among the SIM card 105, the SIM card holding means 201 and the elastic lockup means 203. FIG. 4B shows the side view of the related locations among the SIM card 105, the SIM card holding means 201 and the elastic lockup means 203. It is unable for the SIM card 105 to be inserted into the SIM card holding means 201 because the elastic lockup means 203 block the opening of the SIM card passage 211. Then, as FIG. 4B shows, the user can slightly push down the elastic lockup means 203 in order to let the SIM card 105 slide into the SIM card holding means 201. Moreover, the user can also insert the SIM card 105 into the SIM card passage 211 by tilting the SIM card 105 in a suitable angle.

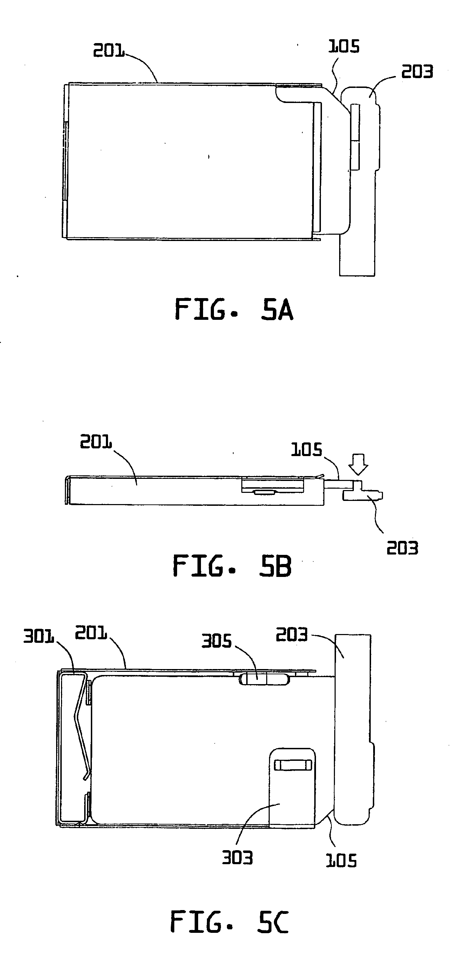

Please referring to FIG. 5A, FIG. 5B, and FIG. 5C, they show the illustrations after the SIM card 105 is inserted into the SIM card holding means 201. As the figures show, the elastic lockup means locks up the SIM card 105 to keep the SIM card 105 into the SIM card holding means 201. When the SIM card 105 is inserted into the SIM card holding means 201, the ejecting means 301 is pressed by the SIM card 105. The ejecting means 301 and the elastic lockup means 203 tightly fasten the SIM card 105 to prevent the SIM card 105 from moving along the SIM card holding means 201 and disconnecting from the portable data processing / communication device 101. In addition, the SIM card supporting means 303 and the supporting means 305 can further support and fasten the SIM card 105 to prevent the SIM card 105 from moving along the SIM card holding means 201 as well..

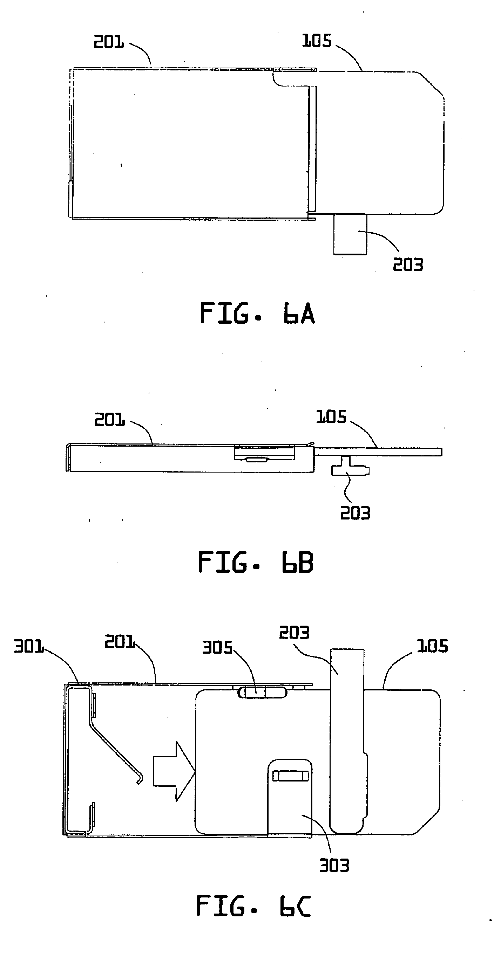

When the SIM card 105 is going to be ejected from the SIM card holding means 201, as the FIG. 5B shows, the user can press the elastic lockup means 203. Since the elastic lockup means 203 is pressed by the SIM card 105, the elastic lockup means 203 is deformed and the rebounding force of the elastic lockup means 203 is generated. Therefore, when the user presses the elastic lockup means 203, the SIM card 105 can be ejected from the SIM card holding means 201 by the rebounding force of the elastic lockup means 203, as shown in FIG. 6A, FIG. 6B, and FIG. 6C. In this manner, it is very convenient for users to execute the ejection of the SIM card 105

The apparatus for inserting a SIM card into a portable data processing / communication device according to the above embodiment of the present invention has the following advantages: (1). The apparatus for inserting a SIM card is manufactured on the side of the housing. That increases the usage of the inner space of the portable data processing / communication device. Thus, the size of the battery can be increased or the size of the portable data processing / communication device can be decreased when designing the portable data processing / communication devices. (2). Users do not need to open the housing of the battery in order to insert or eject the SIM card. Instead, users can easily and directly insert or eject the SIM card without opening the coverage of the housing. It is very convenient for users to prevent other parts of the portable data processing / communication device from damaging when inserting or ejecting the SIM card.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An apparatus for accommodating a subscriber identity module (SIM) card (105) into a portable data processing / communication device (101), wherein the portable data processing / communication device (101) includes a housing (103), the apparatus comprising:
- a SIM card holding means (201) provided in the inner side of the housing (103), wherein the SIM card holding means (201) comprises a SIM card passage (211) and an ejecting unit (301) for ejecting the SIM card (105) out from the SIM card holding means (201) through the SIM card passage (211); and
- an elastic lockup means (203) placed in the outer side of the housing (103) corresponding to the position of the SIM card passage (211) for covering the SIM card passage (211) and locking up the SIM card (105) when the SIM card (105) is located in the SIM card holding means (201), wherein the SIM card (105) causes the elastic lockup means (203) to rotate when the SIM card (105) is being inserted into the SIM card holding means (201), thereby allowing the SIM card (105) to enter through the SIM card passage (211).

2. The apparatus according to claim 1, wherein the elastic lockup means (203) comprises a fixed end (209) fixed on the housing and a free end (207) for being forced to rotate around the fixed end (209) so as to move along the direction vertical to the direction which the SIM card (105) is inserted to the SIM card holding means (201).

3. The apparatus according to claim 1, wherein the SIM card holding means (201) further comprises a supporting means (305) for supporting the SIM card (105) when the SIM card (105) is inserted into the SIM card holding means (201).

4. The apparatus according to claim 1, wherein the SIM card holding means (201) further comprises a SIM card supporting means (303) for fixing the SIM card (105) when the SIM card (105) is inserted into the SIM card holding means (201).

5. The apparatus according to claim 1, wherein the portable data processing / communication device (101) is a personal digital assistant (PDA) with the function of wireless communication.

6. The apparatus according to claim 1, wherein the SIM card holding means (201) is mounted on the housing (103) by the surface mounting technology (SMT).

7. The apparatus according to claim 1, wherein when the SIM card (105) is inserted into the SIM card holding means (201) through the SIM card passage (211), the SIM card (105) is fixed by the ejecting means (301) and the elastic lockup means (203), and when the elastic lockup means (203) is pressed, the SIM card (105) can be ejected from the SIM card holding means (201) through the SIM card passage (211).

8. The apparatus according to claim 7, wherein the SIM card holding means (201) further comprises a supporting means (305) for supporting the SIM card (105) when the SIM card (105) is inserted into the SIM card holding means (201).

9. The apparatus according to claim 7, wherein the SIM card holding means (201) further comprises a SIM card supporting means (303) for fixing the SIM card (105) when the SIM card (105) is inserted into the SIM card holding means (201).

10. The apparatus according to claim 7, wherein, the elastic lockup means (203) further comprises a fixed end (209) fixed on the housing (103) and a free end (207) for being forced to rotate around the fixed end (209) so as to move along the housing (103) when the free end (207) is pressed.

11. The apparatus according to claim 7, wherein the portable data processing / communication device (101) is a PDA with the function of wireless communication.

12. The apparatus according to Claim 7, wherein the SIM card holding means (201) is mounted on the housing by SMT.

## Patentansprüche

1. Vorrichtung zur Aufnahme einer Subscriber-Identity-Module-(SIM-)Card (105) in einem tragbaren Datenverarbeitungs-/Kommunikationsgerät (101), wobei das tragbare Datenverarbeitungs-/Kommunikationsgerät (101) ein Gehäuse (103) umfasst, wobei die Vorrichtung aufweist:
- eine SIM-Card-Halterungseinrichtung (201), die auf der Innenseite des Gehäuses (103) vorgesehen ist, wobei die SIM-Card-Halterungseinrichtung (201) einen SIM-Card-Durchgang (211) und eine Auswurfeinheit (301) aufweist, um die SIM-Card (105) durch den SIM-Card-Durchgang (211) aus der SIM-Card-Halterungseinrichtung (201) auszuwerfen; und
- eine elastische Verschlusseinrichtung (203), die auf der Außenseite des Gehäuses (103) entsprechend der Position des SIM-Card-Durchgangs (211) angeordnet ist, um den SIM-Card-Durchgang (211) abzudecken und die SIM-Card zu verschließen, wenn die SIM-Card (105) in der SIM-Card-Halterungseinrichtung (201) liegt, wobei die SIM-Card (105) bewirkt, dass sich die elastische Verschlusseinrichtung (203) dreht, wenn die SIM-Card (105) in die SIM-Card-Halterungseinrichtung (201) eingeführt wird, um der SIM-Card (105) **dadurch** zu ermöglichen, durch den SIM-Card-Durchgang (211) einzudringen.

2. Vorrichtung nach Anspruch 1, wobei die elastische Verschlusseinrichtung (203) ein am Gehäuse befestigtes fixiertes Ende (209) und ein freies Ende (207) aufweist, um gezwungen zu sein, sich um das fixierte Ende (209) zu drehen, um sich längs der Richtung vertikal zur Richtung zu bewegen, in die die SIM-Card (105) in die SIM-Card-Halterungseinrichtung (201) eingeschoben wird.

3. Vorrichtung nach Anspruch 1, wobei die SIM-Card-Halterungseinrichtung (201) ferner eine Abstützeinrichtung (305) aufweist, um die SIM-Card (105) abzustützen, wenn die SIM-Card (105) in die SIM-Card-Halterungseinrichtung (201) eingeführt ist.

4. Vorrichtung nach Anspruch 1, wobei die SIM-Card-Halterungseinrichtung (201) ferner eine SIM-Card-Abstützeinrichtung (303) aufweist, um die SIM-Card (105) zu fixieren, wenn die SIM-Card (105) in die SIM-Card-Halterungseinrichtung (201) eingeführt ist.

5. Vorrichtung nach Anspruch 1, wobei das tragbare Datenverarbeitungs-/Kommunikationsgerät (101) ein persönlicher digitaler Assistent (PDA) mit der Funktion der drahtlosen Datenübertragung ist.

6. Vorrichtung nach Anspruch 1, wobei die SIM-Card-Halterungseinrichtung (201) auf dem Gehäuse (103) durch die Oberflächenmontagetechnologie (SNT) montiert ist.

7. Vorrichtung nach Anspruch 1, wobei, wenn die SIM-Card (105) in die SIM-Card-Halterungseinrichtung (201) eingeführt wird, die SIM-Card (105) durch die Auswurfeinrichtung (301) und die elastische Verschlusseinrichtung (203) befestigt wird, und wenn die elastische Verschlusseinrichtung (203) gedrückt wird, kann die SIM-Card (105) aus der SIM-Card-Halterungseinrichtung (201) durch den SIM-Card-Durchgang (211) ausgeworfen werden.

8. Vorrichtung nach Anspruch 7, wobei die SIM-Card-Halterungseinrichtung (201) ferner eine Abstützeinrichtung (305) aufweist, um die SIM-Card (105) abzustützen, wenn die SIM-Card (105) in die SIM-Card-Halterungseinrichtung (201) eingeführt ist.

9. Vorrichtung nach Anspruch 7, wobei die SIM-Card-Halterungseinrichtung (201) ferner eine SIM-Card-Abstützeinrichtung (303) aufweist, um die SIM-Card (105) zu fixieren, wenn die SIM-Card (105) in die SIM-Card-Halterungseinrichtung (201) eingeführt ist.

10. Vorrichtung nach Anspruch 7, wobei die elastische Verschlusseinrichtung (203) ferner ein am Gehäuse (103) befestigtes fixiertes Ende (209) und ein freies Ende (207) aufweist, um gezwungen zu sein, sich um das fixierte Ende (209) zu drehen, um sich längs des Gehäuses (103) zu bewegen, wenn das freie Ende (207) gedrückt wird.

11. Vorrichtung nach Anspruch 7, wobei das tragbare Datenverarbeitungs-/Kommunikationsgerät (101) ein PDA mit einer Funktion zur drahtlosen Datenübertragung ist.

12. Vorrichtung nach Anspruch 7, wobei die SIM-Card-Halterungseinrichtung (201) auf dem Gehäuse durch SMT montiert ist.

## Revendications

1. Dispositif destiné à recevoir une carte de module d'indentification de l'abonné (SIM) (105) dans un dispositif de communication - traitement de données (101), dans lequel le dispositif de communication - traitement de données (101) comporte un boîtier (103), le dispositif comprenant :
- un moyen de réception de carte SIM (201) prévu dans la face interne du boîtier (103), dans lequel le moyen de réception de carte SIM (201) comprend un passage de carte SIM (211) et une unité d'éjection (301) pour éjecter la carte SIM (105) du moyen de réception de carte SIM (201) via le passage de carte SIM (211) ; et
- un moyen de verrouillage élastique (203) placé dans la face externe du boîtier (103) correspondant à la position du passage de carte SIM (211) pour couvrir le passage de carte SIM (211) et verrouiller la carte SIM (105) lorsque la carte SIM (105) est logée dans le moyen de réception de carte SIM (201), dans lequel la carte SIM (105) provoque la rotation du moyen de verrouillage élastique (203) lorsque la carte SIM (105) est insérée dans le moyen de réception de carte SIM (201), ce qui permet ainsi à la carte SIM (105) de pénétrer par le passage de carte SIM (211).

2. Dispositif selon la revendication 1, dans lequel le moyen de verrouillage élastique (203) comporte une extrémité fixe (209) fixée sur le boîtier et une extrémité libre (207) destinée à être forcée à pivoter autour de l'extrémité fixe (209) afin de se déplacer dans la direction verticale à la direction dans laquelle la carte SIM (105) est insérée dans le moyen de réception de carte SIM (201).

3. Dispositif selon la revendication 1, dans lequel le moyen de réception de carte SIM (201) comporte en outre un moyen de support (305) pour soutenir la carte SIM (105) lorsque la carte SIM (105) est insérée dans le moyen de réception de carte SIM (201).

4. Dispositif selon la revendication 1, dans lequel le moyen de réception de carte SIM (201) comporte en outre un moyen de support de carte SIM (303) pour fixer la carte SIM (105) lorsque la carte SIM (105) est insérée dans le moyen de réception de carte SIM (201).

5. Dispositif selon la revendication 1, dans lequel le dispositif de communication - traitement de données portable (101) est un assistant numérique personnel (PDA) ayant une fonction de communication sans fil.

6. Dispositif selon la revendication 1, dans lequel le moyen de réception de carte SIM (201) est monté sur le boîtier (103) au moyen de la technologie de montage en surface (SMT).

7. Dispositif selon la revendication 1, dans lequel lorsque la carte SIM (105) est insérée dans le moyen de réception de carte SIM (201) via le passage de carte SIM (211), la carte SIM (105) est fixée par le moyen d'éjection (301) et par le moyen de verrouillage élastique (203), et lorsque le moyen de verrouillage élastique (203) est enfoncé, la carte SIM (105) peut être éjectée du moyen de réception de carte SIM (201) via le passage de carte SIM (211).

8. Dispositif selon la revendication 7, dans lequel le moyen de réception de carte SIM (201) comporte en outre un moyen de support (305) pour soutenir la carte SIM (105) lorsque la carte SIM (105) est insérée dans le moyen de réception de carte SIM (201).

9. Dispositif selon la revendication 7, dans lequel le moyen de réception de carte SIM (201) comporte en outre un moyen de support de carte SIM (303) pour fixer la carte SIM (105) lorsque la carte SIM (105) est insérée dans le moyen de réception de carte SIM (201).

10. Dispositif selon la revendication 7, dans lequel le moyen de verrouillage élastique (203) comporte en outre une extrémité fixe (209) fixée sur le boîtier (103) et une extrémité libre (207) destinée à être forcée à pivoter autour de l'extrémité fixe (209) afin de se déplacer le long du boîtier (103) lorsque l'extrémité libre (207) est enfoncée.

11. Dispositif selon la revendication 7, dans lequel le dispositif de communication - traitement de données portable (101) est un assistant numérique personnel (PDA) ayant une fonction de communication sans fil.

12. Dispositif selon la revendication 7, dans lequel le moyen de réception de carte SIM (201) est monté sur le boîtier au moyen de la technologie de montage en surface (SMT).
